# EUROPEAN PATENT APPLICATION

(11) **EP 3 358 825 A1**
(43) Date of publication of application: **08.08.2018**
(21) Application number: 16850713.5
(22) Date of filing: 14.04.2016
(51) Int. Cl.: H04N 5/363, H04N 5/341, H04N 5/3745

(54) **IMAGING ELEMENT AND ENDOSCOPE**

(30) Priority: 30.09.2015 JP 2015193984
(71) Applicant: Olympus Corporation, Hachioji-shi Tokyo 192-8507 (JP)
(72) Inventor: ADACHI, Satoru, Hachioji-shi Tokyo 192-8507 (JP); AKAHANE, Nana, Hachioji-shi Tokyo 192-8507 (JP); TANAKA, Takanori, Hachioji-shi Tokyo 192-8507 (JP)
(74) Representative: Gunzelmann, Rainer
(86) International application number: PCT/JP2016/062030
(87) International publication number: WO 2017/056536

(57) **Abstract**

Provided are an image sensor and an endoscope that realize both further downsizing and fast readout. The image sensor includes a timing generating unit 25 that drives a plurality of pixel output transistors 238 positioned in different rows from each other at the same time during at least a part of a period, and drives a transfer transistor 234 positioned in one row and performs a reset noise removal operation by a reset noise removal unit 244, then transfers an imaging signal to a first horizontal transfer line 259 while keeping the pixel output transistor 238 driven, which is positioned in one row, and drives the transfer transistor 234 positioned in the other row and performs the reset noise removal operation by the reset noise removal unit 244 in an operation period in which the pixel output transistor 238 positioned in one row transfers the imaging signal to the first horizontal transfer line 259.

## Description

### Field

The present invention relates to an image sensor and an endoscope that capture an object to generate an image data of the object.

### Background

In recent years, in complementary metal oxide semiconductor (CMOS) image sensors, a technique for reading image signals from pixels at a high speed with achievement of multi-pixels has been well known(see Patent Literature 1). In this technique, two or more sets of external storage capacitances are provided in every vertical scanning line, and readout from pixels of a scanning line of the next one row to the external storage capacitance is performed during a horizontal transfer period of the scanning line in which image signals of one row are read out from a plurality of pixel cells including the photoelectric conversion element, so that the image signals are read from the image sensors of multi-pixels at a high speed.

### Citation List

### Patent Literature

Patent Literature 1: JP 2001-45375 A

### Summary

### Technical Problem

However, in the case of Patent Literature 1 described above, two or more sets of external storage capacitances are provided in every vertical scanning line. Therefore, an area necessary to mount the external storage capacitances becomes large, which hinders realization of downsizing of the image sensor.

The present invention has been made in view of the foregoing, and an objective is to provide an image sensor and an endoscope that realize both further downsizing and fast readout.

### Solution to Problem

To solve the above-described problem and achieve the object, an image sensor according to the present invention includes: a plurality of unit pixels arranged in a two-dimensional matrix, each of the unit pixels including a photoelectric converter, a charge-voltage converter, a charge transfer unit configured to transfer a charge from the photoelectric converter to the charge-voltage converter, and an output unit configured to output a signal voltage converted by the charge-voltage converter; a plurality of first transfer lines provided in every column in an arrangement of the unit pixels, and configured to transfer the signal output from each of the unit pixels; a constant current source provided in each of the first transfer lines, and configured to drive the output unit in each of the unit pixels to transfer the signal to the first transfer line; a reset noise removal unit configured to remove a noise component caused by resetting the charge-voltage converter to a predetermined potential; a second transfer line configured to transfer the signal from the first transfer line via the reset noise removal unit; and a control unit configured to drive the output units of the unit pixels respectively positioned in different rows at a same time in at least a part of a period, to drive the charge transfer unit of the unit pixel positioned in one row and perform a reset noise removal operation by the reset noise removal unit, then to transfer the signal to the second transfer line while keeping the output unit of the unit pixel driven, the unit pixel being positioned in the one row, and to drive the charge transfer unit of the unit pixel positioned in another row and perform the reset noise removal operation by the reset noise removal unit, in an operation period in which the output unit of the unit pixel positioned in the one row transfers the signal to the second transfer line.

Moreover, in the above-described image sensor according to the present invention, the second transfer line includes a first horizontal scanning line that outputs, to an outside, the signal output by the output unit of the unit pixel positioned in the one row, and a second horizontal scanning line that outputs, to an outside, the signal output by the output unit of the unit pixel positioned in the other row.

Moreover, in the above-described image sensor according to the present invention, the first horizontal scanning line and the second horizontal scanning line are arranged one above the other across the plurality of unit pixels.

Moreover, the above-described image sensor according to the present invention includes a first chip including the plurality of unit pixels and the plurality of first transfer lines, the constant current source, the reset noise removal unit, the second transfer line, and the control unit are arranged, and the first chip is stacked.

Moreover, in the above-described image sensor according to the present invention, the unit pixel includes: a plurality of the photoelectric converters; the charge-voltage converter; a plurality of the charge transfer units configured to transfer charges from the plurality of photoelectric converters to the charge-voltage converter; and the output unit configured to output a signal voltage converted by the charge-voltage converter, and the control unit sequentially drives the plurality of photoelectric converters included in the unit pixel.

Moreover, an endoscope according to the present invention includes: the above-described image sensor according to the present invention arranged in a distal end side of an insertion portion insertable into a subject. Advantageous Effects of Invention

According to the present invention, effect to realize both the further downsizing and the fast readout can be exhibited.

### Brief Description of Drawings

FIG. 1 is a schematic diagram schematically illustrating an overall configuration of an endoscope system according to a first embodiment of the present invention.
FIG. 2 is a block diagram illustrating functions of principal portions of the endoscope system according to the first embodiment of the present invention.
FIG. 3 is a block diagram illustrating a detailed configuration of a first chip illustrated in FIG. 2.
FIG. 4 is a circuit diagram illustrating a configuration of unit pixels included in the first chip illustrated in FIG. 2.
FIG. 5 is a timing chart illustrating drive timing of an imaging unit according to the first embodiment of the present invention.
FIG. 6 is a block diagram illustrating a detailed configuration of a first chip according to a second embodiment of the present invention.
FIG. 7 is a circuit diagram illustrating a configuration of unit pixels included in the first chip according to the second embodiment of the present invention.
FIG. 8 is a timing chart illustrating drive timing of an imaging unit according to the second embodiment of the present invention.
FIG. 9 is a block diagram illustrating a detailed configuration of a first chip according to a third embodiment of the present invention.
FIG. 10 is a circuit diagram illustrating a configuration of unit pixels included in the first chip according to the third embodiment of the present invention.
FIG. 11 is a timing chart illustrating drive timing of an imaging unit according to the third embodiment of the present invention.

### Description of Embodiments

Hereinafter, an endoscope system including an endoscope having an image sensor provided at a distal end of an insertion portion to be inserted into a subject will be described as forms for implementing the present invention (hereinafter, referred to as "embodiments"). Further, the present invention is not limited by the embodiments. Further, description will be given, denoting the same portions with the same sign in illustration of the drawings. Further, note that the drawings are schematically illustrated, and relationship between the thickness and the width of members, ratios of members, and the like differ from reality. Further, portions having different dimensions or ratios are included between the drawings.

### (First Embodiment)

### [Configuration of Endoscope System]

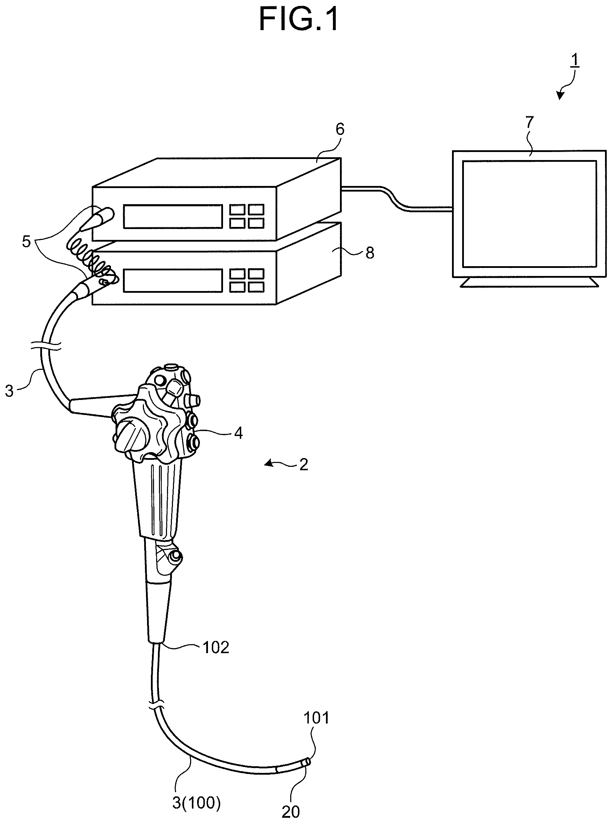

FIG. 1 is a schematic diagram schematically illustrating an overall configuration of an endoscope system according to the first embodiment of the present invention. An endoscope system 1 illustrated in FIG. 1 includes an endoscope 2, a transmission cable 3, a connector unit 5, a processor 6 (processing device), a display device 7, and a light source device 8.

The endoscope 2 captures an inside of a body of a subject and outputs an imaging signal (image data) to the processor 6 by insertion of an insertion portion 100 as a part of the transmission cable 3 into a body cavity of the subject. Further, the endoscope 2 is provided with an imaging unit 20 (imaging device) that captures an in-vivo image and an operating unit 4 that receives various operations to the endoscope 2. The imaging unit 20 is provided at one end side of the transmission cable 3 and at a side of the distal end 101 of the insertion portion 100 to be inserted into the body cavity of the subject. The operating unit 4 is provided at a side of the proximal end 102 of the insertion portion 100. The imaging signal of an image captured by the imaging unit 20 is output to the connector unit 5 through the transmission cable 3 having a length of several meters, for example.

The transmission cable 3 connects the endoscope 2 and the connector unit 5, and connects the endoscope 2 and the light source device 8. Further, the transmission cable 3 transmits the imaging signal generated by the imaging unit 20 to the connector unit 5. The transmission cable 3 is configured from a cable, an optical fiber, and the like.

The connector unit 5 is connected to the endoscope 2, the processor 6, and the light source device 8, applies predetermined signal processing to the imaging signal output by the connected endoscope 2, performs conversion (A/D conversion) of the analog imaging signal into a digital imaging signal, and outputs the digital imaging signal to the processor 6.

The processor 6 applies predetermined image processing to the imaging signal input from the connector unit 5, and outputs the imaging signal to the display device 7. Further, the processor 6 integrally controls the entire endoscope system 1. For example, the processor 6 performs control to switch illumination light emitted by the light source device 8 and to switch an imaging mode of the endoscope 2.

The display device 7 displays an image corresponding to the imaging signal to which the image processing has been applied by the processor 6. Further, the display device 7 displays various types of information regarding the endoscope system 1. The display device 7 is configured from a display panel such as a liquid crystal panel or an organic electro luminescence (EL) panel, and the like.

The light source device 8 irradiates an object with illumination light from a side of the distal end 101 of the insertion portion 100 of the endoscope 2 through the connector unit 5 and the transmission cable 3. The light source device 8 is configured from a white light emitting diode (LED) that emits white light, an LED that emits special light of narrowband light having a narrower wavelength range than the white light, and the like. The light source device 8 irradiates the object with the white light or the narrowband light through the endoscope 2 under control of the processor 6.

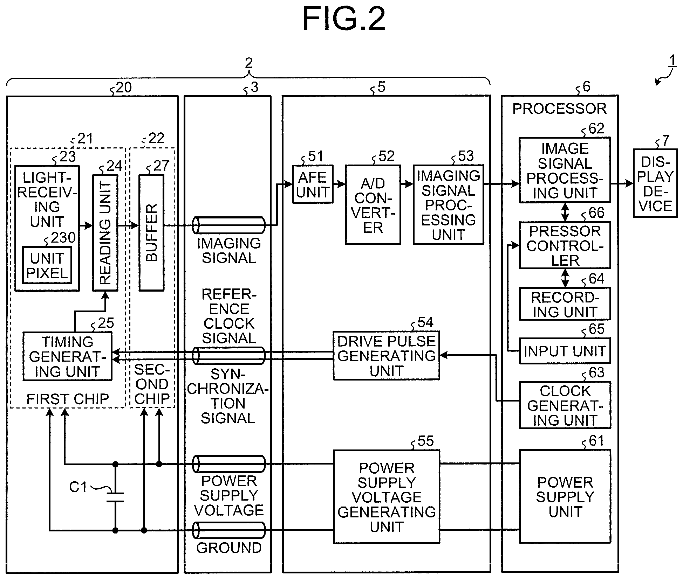

FIG. 2 is a block diagram illustrating functions of principal portions of the endoscope system 1. Referring to FIG. 2, details of configurations of respective units of the endoscope system 1 and a path of an electrical signal in the endoscope system 1 will be described.

### [Configuration of Endoscope]

First, a configuration of the endoscope 2 will be described. The endoscope 2 illustrated in FIG. 2 includes the imaging unit 20, the transmission cable 3, and the connector unit 5.

The imaging unit 20 includes a first chip 21 (image sensor) and a second chip 22. Further, the imaging unit 20 receives a power supply voltage VDD generated by a power supply voltage generating unit 55 of the connector unit 5 described below together with a ground GND through the transmission cable 3. A capacitor C1 for power stabilization is provided between the power supply voltage VDD and the ground GND supplied to the imaging unit 20.

The first chip 21 includes a light-receiving unit 23, a reading unit 24, and a timing generating unit 25.

The light-receiving unit 23 includes a plurality of unit pixels 230 arranged in a two-dimensional matrix manner and which receives light from an outside, and generates and outputs an image signal according to a received light amount. The reading unit 24 reads imaging signals photoelectrically converted in the plurality of unit pixels 230 in the light-receiving unit 23. The timing generating unit 25 generates a timing signal on the basis of a reference clock signal and a synchronization signal input from the connector unit 5, and outputs the timing signal to the reading unit 24. Note that a more detailed configuration of the first chip 21 will be described below.

The second chip 22 includes a buffer 27 that amplifies the imaging signals output from the plurality of unit pixels 230 in the first chip 21 and outputs the amplified imaging signals to the transmission cable 3. Note that a combination of circuits arranged in the first chip 21 and the second chip 22 can be appropriately changed. For example, the timing generating unit 25 arranged in the first chip 21 may be arranged in the second chip 22.

The connector unit 5 includes an analog front end unit 51 (hereinafter, referred to as "AFE unit 51"), an A/D converter 52, an imaging signal processing unit 53, a drive pulse generating unit 54, and a power supply voltage generating unit 55.

The AFE unit 51 receives the imaging signal transmitted from the imaging unit 20, performs impedance matching using a passive element such as a resistor, then takes out an AC component using a capacitor, and determines an operating point by a voltage-dividing resistor. After that, the AFE unit 51 corrects the imaging signal (analog signal) and outputs the corrected imaging signal to the A/D converter 52.

The A/D converter 52 converts the analog imaging signal input from the AFE unit 51 into a digital imaging signal, and outputs the digital imaging signal to the imaging signal processing unit 53.

The imaging signal processing unit 53 is configured from a field programmable gate array (FPGA), and performs processing such as noise removal and format conversion processing for the digital imaging signal input from the A/D converter 52 and outputs the processed imaging signal to the processor 6.

The drive pulse generating unit 54 generates the synchronization signal that indicates a start position of each frame on the basis of the reference clock dignal (for example, a clock signal of 27 MHz) supplied from the processor 6 and serving as a reference of operations of the configuration units of the endoscope 2, and outputs the synchronization signal to the timing generating unit 25 of the imaging unit 20 together with the reference clock signal through the transmission cable 3. Here, the synchronization signal generated by the drive pulse generating unit 54 includes a horizontal synchronization signal and a vertical synchronization signal.

The power supply voltage generating unit 55 generates a power supply voltage necessary to drive the first chip 21 and the second chip 22 from a power supply from the processor 6, and outputs the power supply voltage to the first chip 21 and the second chip 22. The power supply voltage generating unit 55 generates the power supply voltage necessary to drive the first chip 21 and the second chip 22, using a regulator and the like.

### [Configuration of Processor]

Next, a configuration of the processor 6 will be described.

The processor 6 is a control device that integrally controls the entire endoscope system 1. The processor 6 includes a power supply unit 61, an image signal processing unit 62, a clock generating unit 63, a recording unit 64, an input unit 65, and a processor controller 66.

The power supply unit 61 generates the power supply voltage VDD, and supplies the generated power supply voltage VDD to the power supply voltage generating unit 55 of the connector unit 5 together with the ground (GND).

The image signal processing unit 62 performs image processing such as synchronization processing, white balance (WB) adjustment processing, gain adjustment processing, gamma correction processing, digital analog (D/A) conversion processing, and format conversion processing, for the digital imaging signal to which the signal processing has been applied in the imaging signal processing unit 53, and converts the digital imaging signal into an image signal and outputs the image signal to the display device 7.

The clock generating unit 63 generates the reference clock signal serving as a reference of operations of the configuration units of the endoscope system 1, and outputs the reference clock signal to the drive pulse generating unit 54.

The recording unit 64 records various types information regarding the endoscope system 1 and data during the processing. The recording unit 64 is configured from a recording medium of a flash memory or a random access memory (RAM).

The input unit 65 receives inputs of various operations regarding the endoscope system 1. For example, the input unit 65 receives an input of an instruction signal for switching the type of the illumination light emitted by the light source device 8. The input unit 65 is configured from a cross switch or a push button, for example.

The processor controller 66 integrally controls the units that configure the endoscope system 1. The processor controller 66 is configured from a central processing unit (CPU) and the like. The processor controller 66 switches the illumination light emitted by the light source device 8 according to the instruction signal input from the input unit 65.

### [Detailed Configuration of First Chip]

Next, a detailed configuration of the above-described first chip 21 will be described.

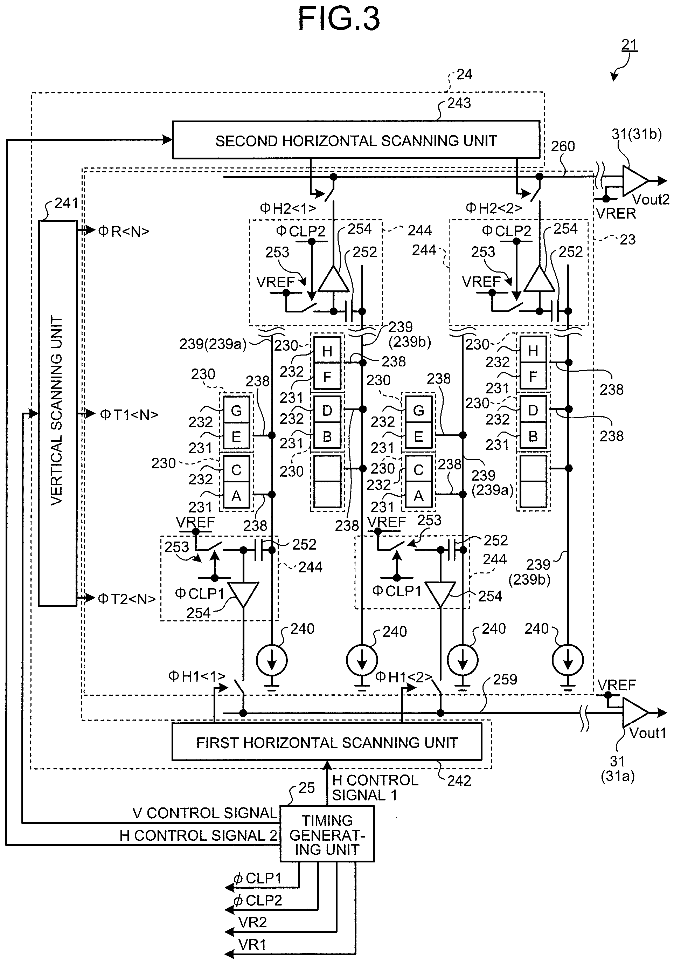

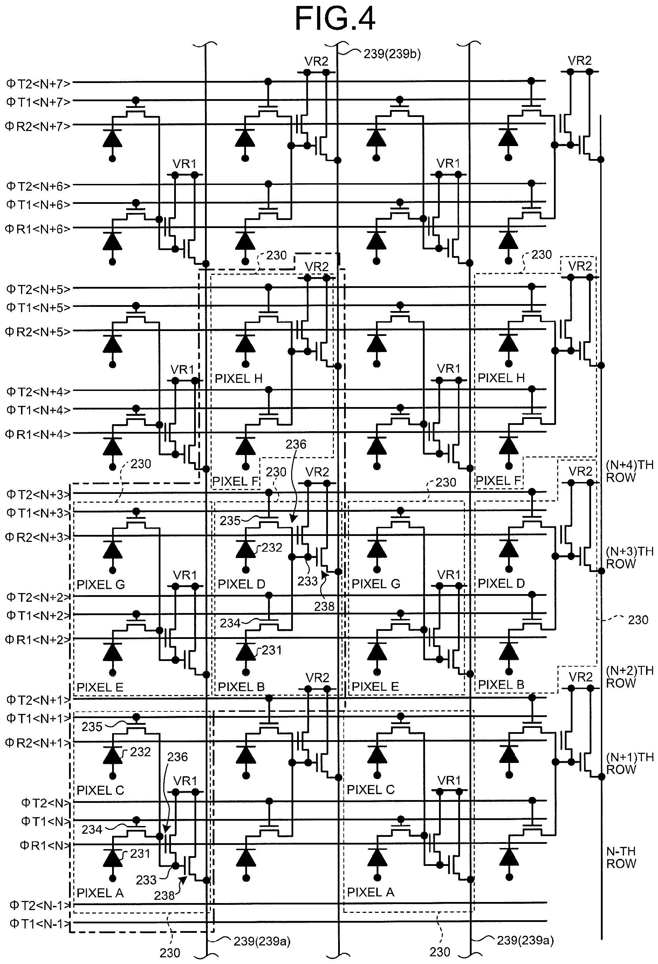

FIG. 3 is a block diagram illustrating a detailed configuration of the first chip 21 illustrated in FIG. 2. FIG. 4 is a circuit diagram illustrating a configuration of the unit pixels 230 included in the first chip 21 illustrated in FIG. 2.

As illustrated in FIGS. 3 and 4, the first chip 21 includes the light-receiving unit 23, the reading unit 24, the timing generating unit 25, a constant current source 240, a reset noise removal unit 244, and an output unit 31. Note that the configuration of the light-receiving unit 23 will be described below.

The timing generating unit 25 generates various drive pulses, a V control signal, a power supply voltage VR1, and the power supply voltage VR2 on the basis of the reference clock signal, the synchronization signal, and the power supply voltage VDD, and outputs the generated pulses, signal, and voltages to the reading unit 24, the unit pixel 230, and the reset noise removal unit 244. In the first embodiment, the timing generating unit 25 functions as a control unit that drives a plurality of pixel output transistors 238 positioned in different rows from each other at the same time during at least a part of a period, drives a transfer transistor 234 positioned in one row and performs a reset noise removal operation by the reset noise removal unit 244, then transfers the imaging signal to a first horizontal transfer line 259 while keeping the pixel output transistor 238 driven, which is positioned in one row, and drives a transfer transistor 234 positioned in the other row and performs the reset noise removal operation by the reset noise removal unit 244 in an operation period in which the pixel output transistor 238 positioned in one row transfers the imaging signal to the first horizontal transfer line 259.

The constant current source 240 has one end side connected to a vertical transfer line 239 and the other end side connected to the ground GND. The constant current source 240 drives the unit pixel 230, and reads an output of the unit pixel 230 to the vertical transfer line 239. The imaging signal read to the vertical transfer line 239 is transferred to the reset noise removal unit 244.

The reading unit 24 includes a vertical scanning unit 241, a first horizontal scanning unit 242, and a second horizontal scanning unit 243.

The vertical scanning unit 241 applies φR <N>, φT1 <N>, and φT2 <N> to a selected row <N> (N = 0, 1, 2, ..., n - 1, n) of the light-receiving unit 23 on the basis of the V control signal (drive pulse φR, φT1 and φT2, and the like) input from the timing generating unit 25, and drives the unit pixels 230 of the light-receiving unit 23 with the constant current source 240 connected to the vertical transfer line 239 and the power supply voltage VR1 or the power supply voltage VR2, thereby to transfer the imaging signals from the unit pixels 230 to the vertical transfer line 239 (first transfer line).

The reset noise removal unit 244 (column read circuit) is provided in every vertical transfer line 239 (every column). The reset noise removal unit 244 includes a transfer capacitance 252 (AC-coupled capacitor), a clamp switch 253 (transistor), and an output amplifier 254.

The transfer capacitance 252 has one end side connected to the vertical transfer line 239 and the other end side connected to a signal line into which the reference voltage VREF is input through the clamp switch 253. The transfer capacitance 252 is reset by the reference voltage VREF supplied from the timing generating unit 25 when the clamp switch 253 becomes in an ON state.

The clamp switch 253 has one end side connected to the signal line into which the reference voltage VREF is supplied. Further, the clamp switch 253 has the other end side connected between the transfer capacitance 252 and the output amplifier 254. The clamp switch 253 is input a drive pulse φCLP1 or a drive pulse φCLP2 from the timing generating unit 25.

The reset noise removal unit 244 configured in this way does not require a capacitor for sampling (sampling capacitance), and thus the capacitance of the transfer capacitance 252 (AC-coupled capacitor) may just be a capacitance by which a reset noise of when the transfer capacitance 252 is reset by the reference voltage VREF can be sufficiently low. In addition, the reset noise removal unit 244 can have a small occupancy area in the first chip 21 by the absence of the sampling capacitance.

The first horizontal scanning unit 242 applies a drive pulse φH1 <M> to a column <M> (M = 1, 2, ..., M - 1, M) of a selected vertical transfer line 239 (239a) of the light-receiving unit 23 on the basis of an H control signal 1 (the drive pulse φH1 and the like) supplied from the timing generating unit 25, and transfers and outputs the imaging signals output from the unit pixels 230 in driven by the power supply voltage VR1 to the first horizontal transfer line 259 through the reset noise removal unit 244.

The second horizontal scanning unit 243 applies a drive pulse φH2 <M> to a column <M> (M = 1, 2, ..., M - 1, M) of a selected vertical transfer line 239 (239b) of the light-receiving unit 23 on the basis of an H control signal 2 (the drive pulse φH2, and the like) supplied from the timing generating unit 25, and transfers and outputs the imaging signal output from the unit pixels 230 in driven by the power supply voltage VR2 to a second horizontal transfer line 260 through the reset noise removal unit 244. Note that, in the present first embodiment, the vertical scanning unit 241, the first horizontal scanning unit 242, and the second horizontal scanning unit 243 function as the reading unit 24.

A large number of unit pixels 230 is arrayed in a two-dimensional matrix manner in the light-receiving unit 23 of the first chip 21. Each of the unit pixels 230 includes a photoelectric conversion element 231 (photodiode) and a photoelectric conversion element 232, a charge-voltage converter 233, a transfer transistor 234 and a transfer transistor 235, a charge-voltage converter reset unit 236 (transistor), and the pixel output transistor 238 (signal output unit). Note that, in the present specification, one or a plurality of photoelectric conversion elements, and a transfer transistor for transferring signal charges from the respective photoelectric conversion elements to the charge-voltage converter 233 are called unit cell. That is, the unit cell includes a set of the one or the plurality of photoelectric conversion elements and the transfer transistor, and each of the unit pixels 230 includes one unit cell.

The photoelectric conversion element 231 and the photoelectric conversion element 232 photoelectrically convert incident light into a signal charge amount according to a light amount of the incident light and accumulate the signal charge amount. The photoelectric conversion element 231 and the photoelectric conversion element 232 have cathode sides respectively connected to one end sides of the transfer transistor 234 and the transfer transistor 235, and anode sides connected to the ground GND.

The charge-voltage converter 233 is made of a floating diffusion capacitance (FD), and converts the charges accumulated in the photoelectric conversion element 231 and the photoelectric conversion element 232 into voltages.

The transfer transistor 234 and the transfer transistor 235 respectively transfer the charges from the photoelectric conversion element 231 and the photoelectric conversion element 232 to the charge-voltage converter 233. The transfer transistor 234 and the transfer transistor 235 have gates respectively connected to the signal lines into which the drive pulse φT1 or the drive pulse φT2 is supplied, one end sides connected to the photoelectric conversion element 231 and the photoelectric conversion element 232, and the other end sides connected to the charge-voltage converter 233. The transfer transistor 234 and the transfer transistor 235 become in an ON state when the drive pulse φT1 or the drive pulse φT2 is supplied from the vertical scanning unit 241 through the signal lines, and transfer the signal charges from the photoelectric conversion element 231 and the photoelectric conversion element 232 to the charge-voltage converter 233.

The charge-voltage converter reset unit 236 resets the charge-voltage converter 233 to a predetermined potential. The charge-voltage converter reset unit 236 has one end side connected to the power supply voltage VR1 or the power supply voltage VR2, and the other end side connected to the charge-voltage converter 233. A gate is connected to the signal line into which the drive pulse φR is supplied. The charge-voltage converter reset unit 236 becomes in an ON state when the drive pulse φR is supplied from the vertical scanning unit 241 through the signal line, and discharges the signal charge accumulated in the charge-voltage converter 233 to reset the charge-voltage converter 233 to the predetermined potential.

The pixel output transistor 238 outputs the imaging signal, which has been voltage-converted in the charge-voltage converter 233, to the vertical transfer line 239. The pixel output transistor 238 has one end side connected to the power supply voltage VR1 or the power supply voltage VR2 and the other end side connected to the vertical transfer line 239, and a gate connected to the charge-voltage converter 233. The pixel output transistor 238 becomes in an ON state when the power supply voltage VR1 or the power supply voltage VR2 is supplied, and transfers the imaging signal, the power supply voltage VR1, or the power supply voltage VR2 to the vertical transfer line 239.

The output unit 31 includes a first output unit 31a and a second output unit 31b. The first output unit 31a is configured from a differential amplifier, and outputs a noise-removed imaging signal to an outside by taking a difference between the imaging signal transferred from the first horizontal transfer line 259 and the reference voltage VREF (Vout1). The second output unit 31b is configured from a differential amplifier, and outputs a noise-removed imaging signal to an outside by taking a difference between the imaging signal transferred from the second horizontal transfer line 260 and the reference voltage VREF (Vout2).

### [Operation of Imaging Unit]

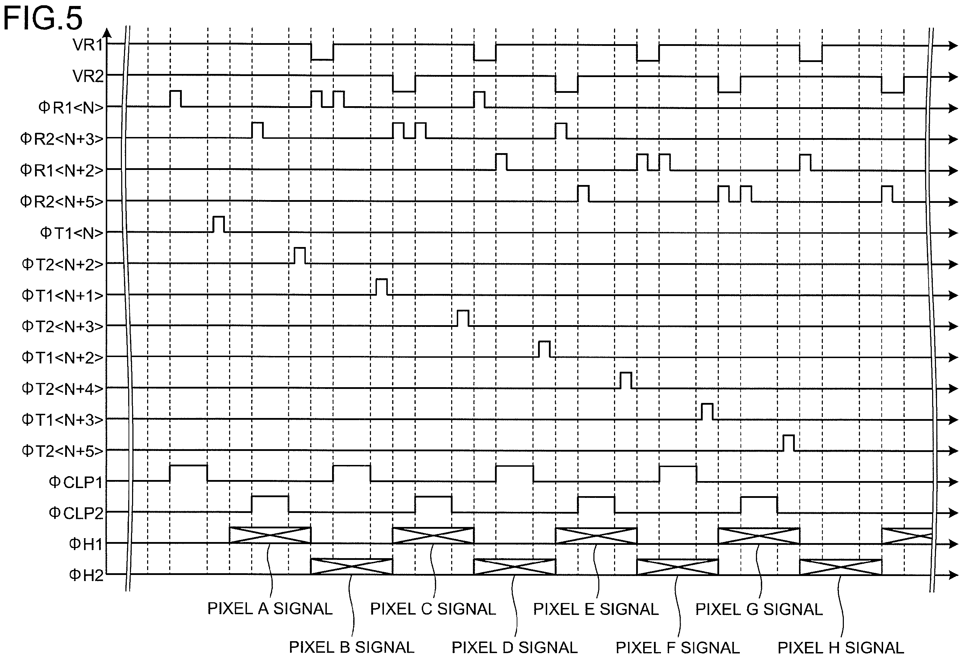

Next, drive timing of the imaging unit 20 will be described. FIG. 5 is a timing chart illustrating drive timing of the imaging unit 20. In FIG. 5, up to readout of the imaging signals from a pixel A to a pixel H illustrated in FIGS. 3 and 4 will be described (the number of the unit pixels 230 is eight). FIG. 5 illustrates, in order from the top, timing of the power supply voltage VR1, the power supply voltage VR2, a drive pulse φR1 <N>, a drive pulse φR2 <N + 3>, a drive pulse φR1 <N + 2>, a drive pulse φP2 <N + 5>, a drive pulse φT1 <N>, a drive pulse φT2 <N + 2>, a drive pulse φT1 <N + 1>, a drive pulse φT2 <N + 3>, a drive pulse φT1 <N + 2>, a drive pulse φT2 <N + 4>, a drive pulse φT1 <N + 3>, a drive pulse φT2 <N + 5>, the drive pulse φCLP1, the drive pulse φCLP2, the drive pulse φH1, and the drive pulse φH2.

As illustrated in FIG. 5, the timing generating unit 25 sets the power supply voltage VR1 and the power supply voltage VR2 to be a high state, and sets the drive pulse φR, the drive pulse φT1, and the drive pulse φT2 to be an OFF state (low) in an accumulation period.

Then, the timing generating unit 25 sets the drive pulse φR1 <N> to an ON state (high) through the vertical scanning unit 241 to drive (hereinafter, referred to as "ON") the pixel output transistor 238. Further, the timing generating unit 25 sets the drive pulse φCLP1 to be an ON state (high) to turn ON the clamp switch 253. In this case, the row to which the drive pulse φR1 <N> is applied by the vertical scanning unit 241 is selected as a row (hereinafter, simply referred to as "selected row") from which the imaging signals are read from the unit pixels 230 (for example, the pixels A illustrated in FIGS. 3 and 4).

After that, the timing generating unit 25 sets the drive pulse φR1 <N> to be an OFF state (low) and then sets the drive pulse φCLP1 to be an OFF state (low) to turn OFF the clamp switch 253, and an input side of the output amplifier 254 is reset by the reference voltage VREF. With the reset, the noise level including variation in a threshold of the pixel output transistor 238 and the reset noise of the charge-voltage converter 233 is clamped to the reference voltage VREF at falling timing of the drive pulse φCLP1.

Then, the timing generating unit 25 sets the drive pulse φT1 <N> to be an ON state (high) through the vertical scanning unit 241 to turn ON the transfer transistor 234. In this case, the charge from the photoelectric conversion element 231 in the unit pixel 230 (pixel A) is transferred to the charge-voltage converter 233 and is converted into the imaging signal. The imaging signal converted by the charge-voltage converter 233 is output to the vertical transfer line 239 (239a) of an odd column by the pixel output transistor 238 and is transferred to the reset noise removal unit 244 provided in each vertical transfer line 239.

After that, the timing generating unit 25 turns ON and OFF the drive pulse φH1 (φH1 <1>, φH1 <2>, ..., φH1 <M - 1>, φH1 <M>) for every column through the first horizontal scanning unit 242 to sequentially read the imaging signals of the unit pixels 230 (pixels A), which have been superimposed on the reference voltage VREF, from the reset noise removal units 244 provided in the vertical transfer lines 239, to the first horizontal transfer line 259, and transfer the imaging signals to the first output unit 31a. The first output unit 31a outputs a difference between the imaging signal transferred from the first horizontal transfer line 259 and the reference voltage VREF to an outside (Vout1).

In contrast, in a period in which the imaging signal of the unit pixel 230 (pixel A) is sequentially read to the first horizontal transfer line 259 in a state where the pixel output transistor 238 of one column is ON, the timing generating unit 25 sets the drive pulse φR2 <N + 3> to be an ON state (high) through the vertical scanning unit 241 to turn ON the pixel output transistor 238 positioned in the other row, and sets the drive pulse φCLP2 to be an ON state (high) to turn ON the clamp switch 253.

After that, the timing generating unit 25 sets the drive pulse φR2 <N + 3> to be an OFF state (low) and then sets the drive pulse φCLP2 to be an OFF state (low) to turn OFF the clamp switch 253, and the input side of the output amplifier 254 is reset by the reference voltage VREF. With the reset, the noise level including variation in a threshold of the pixel output transistor 238 and the reset noise of the charge-voltage converter 233 is clamped to the reference voltage VREF at falling timing of the drive pulse φCLP2.

Then, the timing generating unit 25 sets the drive pulse φT2 <N + 2> to be an ON state (high) through the vertical scanning unit 241 to turn ON the transfer transistor 234. In this case, the charge from the photoelectric conversion element 231 in the unit pixel 230 (pixel B) is converted into the imaging signal by the charge-voltage converter 233. The imaging signal converted by the charge-voltage converter 233 is output to the vertical transfer line 239 (239b) of an even column by the pixel output transistor 238 and is transferred to the reset noise removal unit 244 provided in each vertical transfer line 239.

After that, the timing generating unit 25 sets the power supply voltage VR1 to be a low state after completion of transfer of the imaging signal by the drive pulse φH1 <M> to the first horizontal transfer line 259, and sets the drive pulse φR1 <N> to be an ON state (high) according to falling of the power supply voltage VR1 to turn OFF the pixel output transistor 238. In this case, the row to which the drive pulse φR1 <N> is applied by the vertical scanning unit 241, and the row in which the imaging signals are read from the unit pixels 230 (for example, the pixels A illustrated in FIGS. 3 and 4) becomes unselected (is cancelled). At this time, the timing generating unit 25 turns ON and OFF the drive pulse φH2 (φH2 <1>, φH2 <2>, ..., φH2 <M - 1>, φH2 <M>) for every column through the second horizontal scanning unit 243 to sequentially read the imaging signals of the unit pixels 230 (pixels B), which have been superimposed on the reference voltage VREF, from the reset noise removal units 244 provided in the other vertical transfer lines 239 (239b), to the second horizontal transfer line 260, and transfer the imaging signals to the second output unit 31b. The second output unit 31b outputs a difference between the imaging signal transferred from the second horizontal transfer line 260 and the reference voltage VREF to an outside (Vout2).

When the imaging signal of the unit pixel 230 (pixel B) is sequentially read from the reading unit 24 to the second horizontal transfer line 260 in a state where the pixel output transistor 238 of one column is ON, the timing generating unit 25 sets the power supply voltage VR1 to be a high state, and sets the drive pulse φR1 <N> to be an ON state (high) through the vertical scanning unit 241 according to rising of the power supply voltage VR1, to turn ON the pixel output transistor 238. Further, the timing generating unit 25 sets the drive pulse φCLP1 to be an ON state (high) to turn ON the clamp switch 253. In this case, the row to which the drive pulse φR1 <N> is applied by the vertical scanning unit 241 is selected as the selected row in which the imaging signals are read from the unit pixels 230 (for example, pixels C illustrated in FIGS. 3 and 4).

After that, the timing generating unit 25 sets the drive pulse φCLP1 to be an OFF state (low) to turn OFF the clamp switch 253, and the input side of the output amplifier 254 is reset by the reference voltage VREF.

Then, the timing generating unit 25 sets the drive pulse φT1 <N + 1> to be an ON state (high) through the vertical scanning unit 241 to turn ON the transfer transistor 235. In this case, the charge from the photoelectric conversion element 232 in the unit pixel 230 (pixel C) is converted into the imaging signal by the charge-voltage converter 233. The imaging signal converted by the charge-voltage converter 233 is output to the vertical transfer line 239 (239a) of an odd column by the pixel output transistor 238 and is transferred to the reset noise removal unit 244 provided in each vertical transfer line 239.

After that, the timing generating unit 25 sets the power supply voltage VR2 to be a low state after completion of transfer of the imaging signal by the drive pulse φH2 <M> to the second horizontal transfer line 260, and sets the drive pulse φR2 <N + 3> to be an ON state (high) according to falling of the power supply voltage VR2 to turn OFF the pixel output transistor 238. In this case, the row to which drive pulse φR2 <N + 3> is applied by the vertical scanning unit 241, and the row in which the imaging signals are read from the unit pixels 230 (for example, the pixels B illustrated in FIGS. 3 and 4) becomes unselected (is cancelled). At this time, the timing generating unit 25 turns ON and OFF the drive pulse φH1 (φH1 <1>, φH1 <2>, ...φH1 <M>) for every column through the first horizontal scanning unit 242 to sequentially read the imaging signals of the unit pixels 230 (pixels C), which have been superimposed on the reference voltage VREF, from the reset noise removal units 244 provided in the vertical transfer lines 239, to the first horizontal transfer line 259, and transfer the imaging signals to the first output unit 31a. The first output unit 31a outputs a difference between the imaging signal transferred from the first horizontal transfer line 259 and the reference voltage VREF to an outside (Vout1).

In contrast, when the imaging signal of the unit pixel 230 (pixel C) is sequentially read from the reading unit 24 to the first horizontal transfer line 259 in a state where the pixel output transistor 238 of one column is ON, the timing generating unit 25 is set the power supply voltage VR2 to be a high state. At this time, the timing generating unit 25 sets the drive pulse φR2 <N + 3> to be an ON state (high) through the vertical scanning unit 241 according to rising timing of the power supply voltage VR2 to turn ON the pixel output transistor 238 of the other column, and sets the drive pulse φCLP2 to be an ON state (high) to turn ON the clamp switch 253.

After that, the timing generating unit 25 sets the drive pulse φCLP2 to be an OFF state (low) to turn OFF the clamp switch 253, and the input side of the output amplifier 254 is reset by the reference voltage VREF.

Then, the timing generating unit 25 sets the drive pulse φT2 <N + 3> to be an ON state (high) through the vertical scanning unit 241 to turn ON the transfer transistor 235. In this case, the charge from the photoelectric conversion element 231 in the unit pixel 230 (pixel D) is transferred to the charge-voltage converter 233 and is converted into the imaging signal. The imaging signal converted by the charge-voltage converter 233 is output to the vertical transfer line 239 (239b) of an even column by the pixel output transistor 238 and is transferred to the reset noise removal unit 244 provided in each vertical transfer line 239.

After that, the timing generating unit 25 sets the power supply voltage VR1 to be a low state after completion of transfer of the imaging signal by the drive pulse φH1 <M> to the first horizontal transfer line 259, and sets the drive pulse φR1 <N> to be an ON state (high) according to falling of the power supply voltage VR1 to turn OFF the pixel output transistor 238. In this case, the row to which the drive pulse φR1 <N> is applied by the vertical scanning unit 241, and the row in which the imaging signals are read from the unit pixels 230 (for example, the pixels C illustrated in FIGS. 3 and 4) becomes unselected (is cancelled). At this time, the timing generating unit 25 turns ON and OFF the drive pulse φH2 (φH2 <1>, φH2 <2>, ..., φH2 <M - 1>, φH2 <M>) for every column through the second horizontal scanning unit 243 to sequentially read the imaging signals of the unit pixels 230 (pixels D), which have been superimposed on the reference voltage VREF, from the reset noise removal units 244 provided in the other vertical transfer lines 239 (239b), to the second horizontal transfer line 260, and transfer the imaging signals to the second output unit 31b. The second output unit 31b outputs a difference between the imaging signal transferred from the second horizontal transfer line 260 and the reference voltage VREF to an outside (Vout2).

In this way, the timing generating unit 25 controls ON states of the drive pulse φT1 <N + 2>, the drive pulse φT2 <N + 4>, the drive pulse φT1 <N + 3>, and the drive pulse φT2 <N + 5> in such a manner to transfer the imaging signal of the column corresponding to the other row to the reset noise removal unit 244 in the period in which the pixel output transistor 238 of one row is ON and the imaging signal of the unit pixel 230 is sequentially read from the reading unit 24 of the corresponding column to the first horizontal transfer line 259, and to transfer the imaging signal of the column corresponding to one row to the reset noise removal unit 244 in the period in which the pixel output transistor 238 of the other row is ON and the imaging signal of the unit pixel 230 is sequentially read from the reading unit 24 of the corresponding column to the second horizontal transfer line 260, thereby to alternately read the imaging signals of the remaining unit pixels 230 (a pixel E to a pixel H) to the first horizontal scanning unit 242 and the second horizontal scanning unit 243.

According to the above-described first embodiment of the present invention, two pixel output transistors 238 positioned in different two rows are driven at the same time in at least a part of a period, the transfer transistor 234 (charge transfer unit) positioned in one row is driven and the reset noise removal operation is performed by the reset noise removal unit 244, then the imaging signal is transferred to the first horizontal transfer line 259 while keeping the pixel output transistor 238 driven, which is positioned in one row, and the transfer transistor 234 (charge transfer unit) positioned in the other row is driven and the reset noise removal operation is performed by the reset noise removal unit 244 in the operation period in which the pixel output transistor 238 positioned in one row transfers the imaging signal to the first horizontal transfer line 259. Therefore, both the further downsizing and the fast readout can be realized.

Further, according to the first embodiment of the present invention, the imaging signal is read from the unit pixel 230 positioned in the other row to the reset noise removal unit 244 in the period in which the imaging signal is output from the unit pixel 230 positioned in one row to an outside, whereby a horizontal blanking period can be made substantially zero. That is, according to the first embodiment of the present invention, the readout of the imaging signal to the reset noise removal unit 244, and the output of the imaging signal from the reset noise removal unit 244 to the first horizontal transfer line 259 or the second horizontal transfer line 260 are alternately performed in the unit pixels 230 (the unit pixel 230 positioned in one row and the unit pixel 230 positioned in the other row) that are different in the direction of the vertical transfer line 239, whereby the horizontal blanking period can be made substantially zero. As a result, the horizontal blanking period can be a period in which the imaging signal can be output. Therefore, the imaging signal can be output at a lower speed, and power consumption and a transmission band can be saved. In addition, the imaging unit 20 can be driven at low power consumption. Therefore, an increase in temperature of the distal end 101 of the endoscope 2 can be prevented.

Further, according to the first embodiment of the present invention, the first horizontal transfer line 259 and the second horizontal transfer line 260 are arranged one above the other through the unit pixels 230. Therefore, the center of the first chip 21 and the center of the light-receiving unit 23 nearly accord with each other, and the size in a radial direction of when a lens (not illustrated) and the imaging unit 20 (image sensor) are combined can be made small.

Further, according to the first embodiment of the present invention, the timing generating unit 25 sequentially drives the photoelectric conversion element 231 or the photoelectric conversion element 232 in the unit pixel 230. Therefore, even in a case of a common pixel, the imaging signal can be read out at a high speed.

Further, according to the first embodiment of the present invention, the timing generating unit 25 individually drives the unit pixel 230 positioned in one row and the unit pixel 230 positioned in the other row, and turns the pixel output transistors 238 included in the unit pixels 230 to be an ON state (driven state) at the same time in at least a part of a period. Therefore, the sampling capacitance that holds the imaging signal can be omitted from the column circuit. As a result, reduction of the sampling capacitance becomes possible, and thus downsizing of the imaging unit 20 (image sensor) can be realized.

Note that, in the first embodiment of the present invention, the reset noise removal unit 244, the reading unit 24, and the timing generating unit 25 are provided on the first chip 21. However, these configurations can be provided on the second chip 22. With the configuration, further downsizing of the first chip 21 can be realized, and the downsizing of the imaging unit 20 (image sensor) can be realized.

### (Second Embodiment)

Next, a second embodiment of the present invention will be described. The present second embodiment is different from the above-described first embodiment in that the configuration of the first chip 21. To be specific, in the first chip 21 according to the first embodiment, one pixel output transistor 238 (photoelectric converter) is shared by the two unit pixels 230 in the vertical direction (1 × 2 pixel sharing). In a first chip according to the second embodiment, one pixel output transistor (photoelectric converter) is shared by four unit pixels in a vertical direction (1 × 4 pixel sharing). Hereinafter, a configuration of the first chip according to the second embodiment will be described, and then drive timing of an imaging unit including the first chip will be described. Note that the same configuration as that of the endoscope system 1 according to the above-described first embodiment is denoted with the same sign, and description is omitted.

### [Detailed Configuration of First Chip]

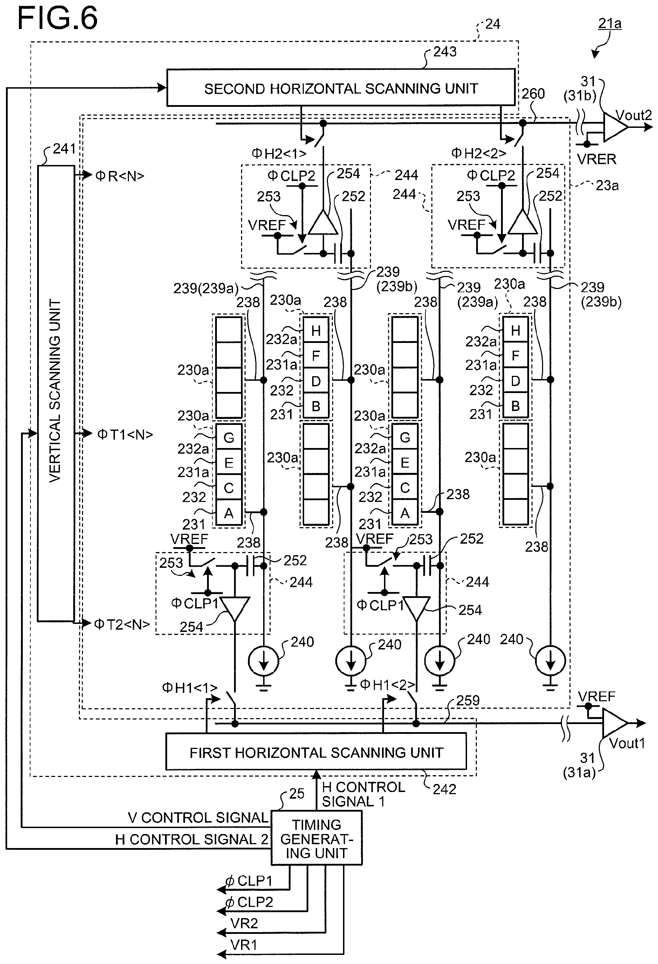

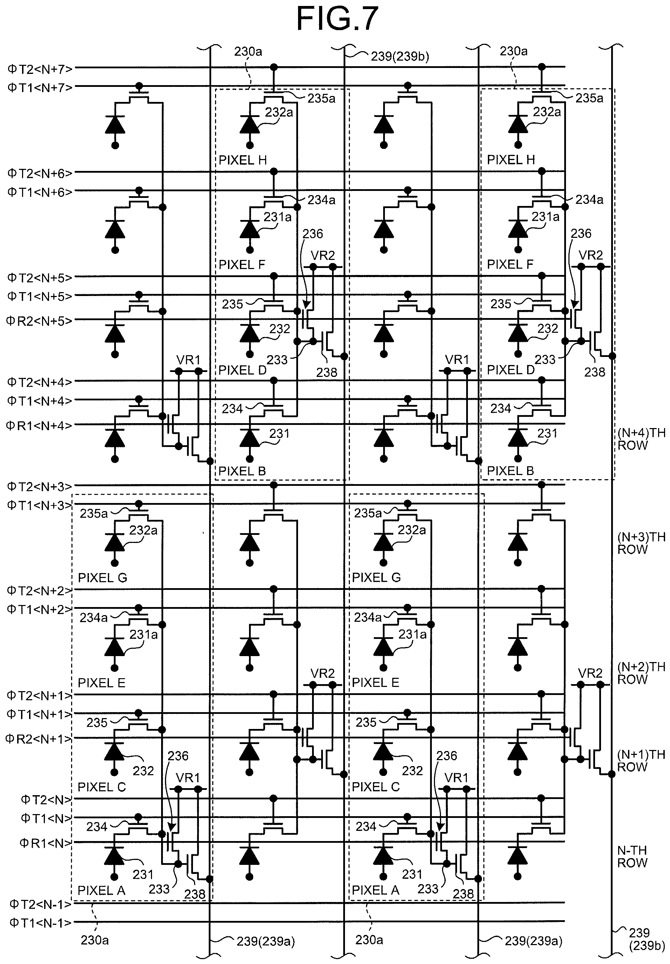

FIG. 6 is a block diagram illustrating a detailed configuration of the first chip according to the second embodiment. FIG. 7 is a circuit diagram illustrating a configuration of unit pixels included in the first chip according to the second embodiment of the present invention.

A first chip 21a illustrated in FIGS. 6 and 7 includes a light-receiving unit 23a, in place of the light-receiving unit 23 in the configuration of the first chip 21 according to the first embodiment. The light-receiving unit 23a includes a plurality of unit pixels 230a, in place of the plurality of unit pixels 230 according to the first embodiment.

The unit pixel 230a includes a photoelectric conversion element 231, a photoelectric conversion element 232, a photoelectric conversion element 231a and a photoelectric conversion element 232a, a charge-voltage converter 233, a transfer transistor 234, a transfer transistor 235, a transfer transistor 234a and a transfer transistor 235a, a charge-voltage converter reset unit 236, and a pixel output transistor 238.

The photoelectric conversion element 231a and the photoelectric conversion element 232a photoelectrically convert incident light into a signal charge amount according to a light amount of the incident light, and accumulates the signal charge amount. The photoelectric conversion element 231a and the photoelectric conversion element 232a have cathode sides respectively connected to one end sides of the transfer transistor 234a and the transfer transistor 235a, and anode sides connected to a ground GND.

The transfer transistor 234a and the transfer transistor 235a respectively transfer charges from the photoelectric conversion element 231a and the photoelectric conversion element 232a to the charge-voltage converter 233. The transfer transistor 234a and the transfer transistor 235a have gates connected to a signal line into which a drive pulse φT1 or a drive pulse φT2 is supplied, and the other end sides connected to the charge-voltage converter 233. The transfer transistor 234a and the transfer transistor 235a become in an ON state when the drive pulse φT1 or the drive pulse φT2 is supplied from a vertical scanning unit 241 through the signal line, and transfer the signal charges from the photoelectric conversion element 231a and the photoelectric conversion element 232a to the charge-voltage converter 233.

### [Operation of Imaging Unit]

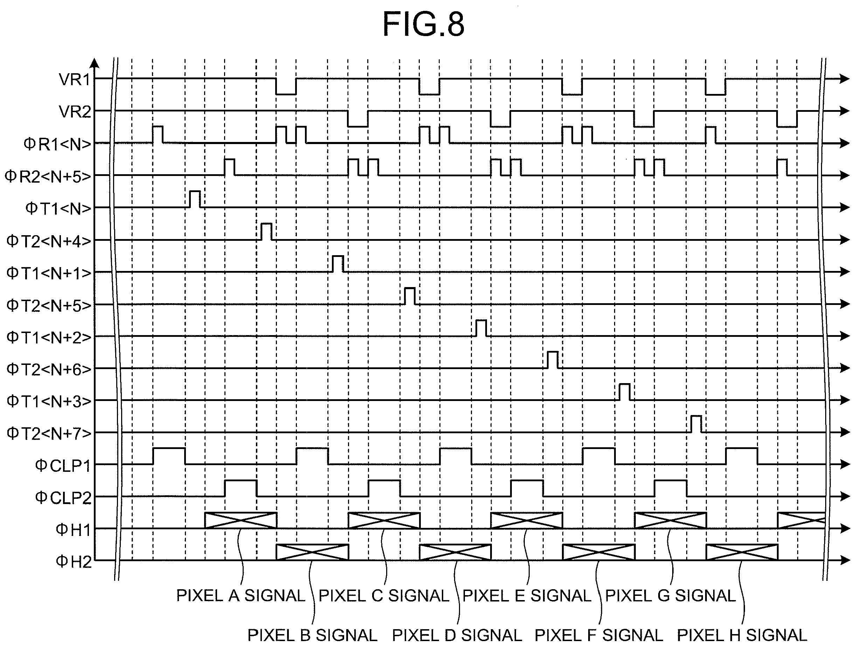

Next, drive timing of an imaging unit 20 will be described. FIG. 8 is a timing chart illustrating drive timing of the imaging unit 20 according to the second embodiment. In FIG. 8, up to readout of imaging signals from a pixel A to a pixel H illustrated in FIGS. 6 and 7 will be described. FIG. 8 illustrates, in order from the top, timing of a power supply voltage VR1, a power supply voltage VR2, a drive pulse φR1 <N>, a drive pulse φR2 <N + 5>, a drive pulse φT1 <N>, a rive pulse φT2 <N + 4>, a drive pulse φT1 <N + 1>, a drive pulse φT2 <N + 5>, a drive pulse φT1 <N + 2>, a drive pulse φT2 <N + 6>, a drive pulse φT1 <N + 3>, a drive pulse φT2 <N + 7>, a drive pulse φCLP1, a drive pulse φCLP2, a drive pulse φH1, and a drive pulse φH2.

As illustrated in FIG. 8, a timing generating unit 25 drives the imaging unit 20 at similar timing to the first embodiment to read the imaging signals from the unit pixels 230a and output the imaging signals to an outside. To be specific, the timing generating unit 25 performs a reset noise removal operation of the other row in a period in which the imaging signal of the unit pixel 230a is sequentially read from a reading unit 24 to a first horizontal transfer line 259 in a state where the pixel output transistor 238 positioned in one row is ON. Further, the timing generating unit 25 performs the reset noise removal operation of one row in a period in which the imaging signal of the unit pixel 230a is sequentially read from the reading unit 24 to a second horizontal transfer line 260 in a state where the pixel output transistor 238 of the other row is ON.

To be more specific, the timing generating unit 25 performs a clamp operation of a reset level of the other row and then outputs the imaging signal from the unit pixel 230a (pixel B) positioned in different rows from each other to the vertical transfer line 239 (239b) in a period in which the imaging signal of the unit pixel 230a (pixel A) is sequentially read to the first horizontal transfer line 259, thereby to transfer the imaging signal to a reset noise removal unit 244 provided in each vertical transfer lines 239. Then, the timing generating unit 25 sequentially outputs the imaging signal of the unit pixel 230a (pixel B) to the second horizontal transfer line 260.

After that, the timing generating unit 25 performs a clamp operation of a reset level of the other row, and outputs the imaging signal from the unit pixel 230a (pixel C) to the vertical transfer line 239 (239a) and transfers the imaging signal to the reset noise removal unit 244 provided in each vertical transfer line 239, in a period in which the imaging signal of the unit pixel 230a (pixel B) is sequentially read to the second horizontal transfer line 260.

Then, the timing generating unit 25 sequentially outputs the imaging signal of the unit pixel 230a (pixel C) to the first horizontal transfer line 259. After that, the timing generating unit 25 performs the clamp operation of a reset level of the other row, and then outputs the imaging signal from a pixel D to the vertical transfer line 239 (239b) in a period in which the imaging signal of the pixel C is sequentially read to the first horizontal transfer line 259, thereby to transfer the imaging signal to the reset noise removal unit 244 provided in each vertical transfer line 239. Then, the timing generating unit 25 sequentially outputs the imaging signal of the unit pixel 230a (pixel D) to the second horizontal transfer line 260.

In this way, the timing generating unit 25 performs the reset noise removal operation of the other row, when the imaging signal of the unit pixel 230a is sequentially read from the reading unit 24 to the first horizontal transfer line 259 in a state where the pixel output transistor 238 of one row is ON. Further, the timing generating unit 25 performs the reset noise removal operation of the other row, when the imaging signal of the unit pixel 230a is sequentially read from the reading unit 24 to the second horizontal transfer line 260 in a state where the pixel output transistor 238 of the other row is ON. With the operation, the pixel A, the pixel B, the pixel C, the pixel D, the pixel E, the pixel F, the pixel G, and the pixel H are read by the vertical transfer lines 239 of different columns from each other, and the other reset noise removal operation is performed in a period in which one pixel is transferred to the first horizontal transfer line 259 or the second horizontal transfer line 260.

According to the second embodiment of the present invention, the pixel output transistors 238 positioned in different rows from each other are driven at the same time in at least a part of a period, the transfer transistor 234 (charge transfer unit) positioned in one row is driven and the reset noise removal operation is performed by the reset noise removal unit 244, then the imaging signal is transferred to the first horizontal transfer line 259 while keeping the pixel output transistor 238 driven, which is positioned in one row, and then the transfer transistor 234 (charge transfer unit) positioned in the other row is driven and the reset noise removal operation is performed by the reset noise removal unit 244 in the operation period in which the pixel output transistor 238 positioned in one row transfers the imaging signal to the first horizontal transfer line 259. Therefore, both the further downsizing and the fast readout can be realized.

### (Third Embodiment)

Next, a third embodiment of the present invention will be described. The present third embodiment is different from the first embodiment in that the configuration of the first chip 21. To be specific, in a first chip according to the third embodiment, a pixel output transistor is shared by eight unit pixels in a vertical direction and in a horizontal direction (2 × 4 pixel sharing). Hereinafter, a configuration of the first chip according to the third embodiment will be described, and then drive timing of an imaging unit including the first chip will be described. Note that the same configuration as that of the endoscope system 1 according to the first embodiment is denoted with the same sign, and description is omitted.

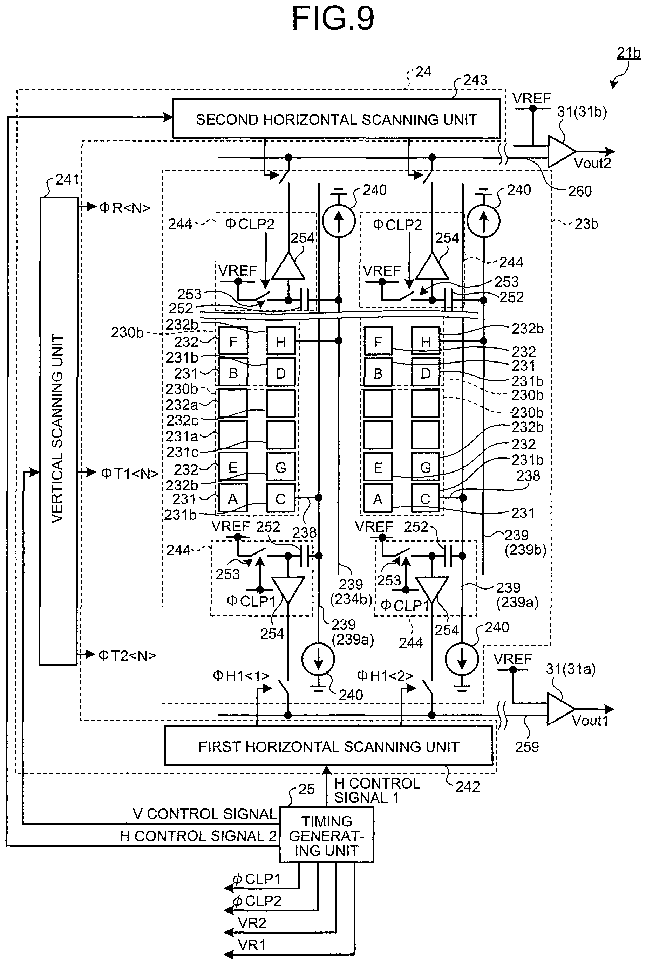

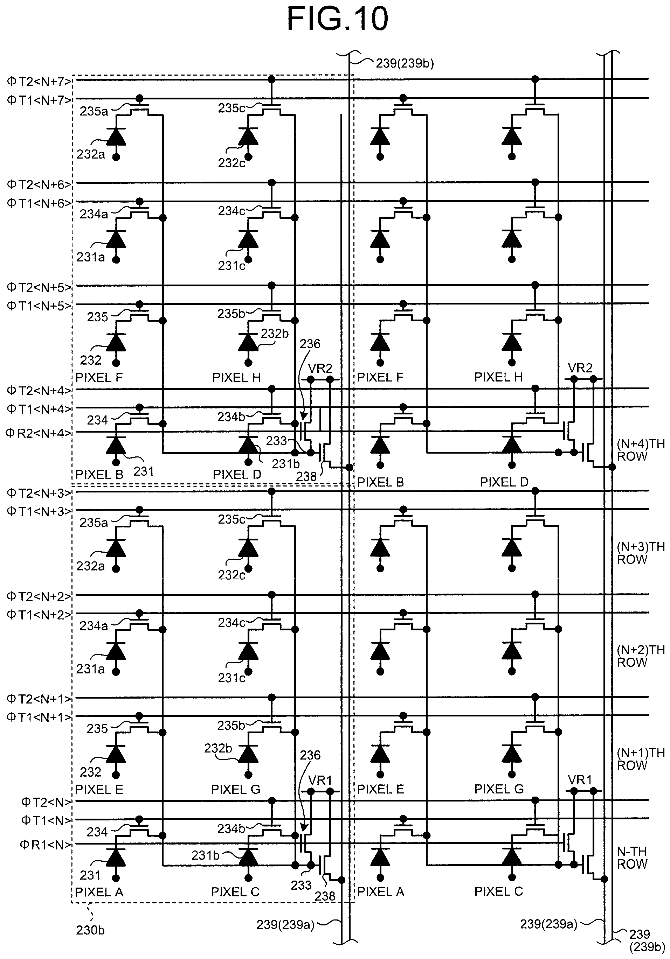

FIG. 9 is a block diagram illustrating a detailed configuration of the first chip according to the third embodiment of the present invention. FIG. 10 is a circuit diagram illustrating a configuration of unit pixels included in the first chip according to the third embodiment of the present invention.

A first chip 21b illustrated in FIGS. 9 and 10 includes a light-receiving unit 23b, in place of the light-receiving unit 23 in the configuration of the first chip 21 according to the first embodiment. The light-receiving unit 23b includes a plurality of unit pixels 230b, in place of the plurality of unit pixels 230 according to the first embodiment.

The unit pixel 230b includes a photoelectric conversion element 231, a photoelectric conversion element 232, a photoelectric conversion element 231a, a photoelectric conversion element 232a, a photoelectric conversion element 231b, a photoelectric conversion element 232b, a photoelectric conversion element 231c, a photoelectric conversion element 232c, a charge-voltage converter 233, a transfer transistor 234, a transfer transistor 235, a transfer transistor 234a, a transfer transistor 235a, a transfer transistor 234b, a transfer transistor 235b, a transfer transistor 234c, a transfer transistor 235c, a charge-voltage converter reset unit 236, and a pixel output transistor 238.

The photoelectric conversion element 231b, the photoelectric conversion element 232b, the photoelectric conversion element 231c, and the photoelectric conversion element 232c photoelectrically convert incident light into a signal charge amount according to a light amount of the incident light, and accumulate the signal charge amount. The photoelectric conversion element 231b, the photoelectric conversion element 232b, the photoelectric conversion element 231c, and the photoelectric conversion element 232c have cathode sides respectively connected to one end sides of the transfer transistor 234b, the transfer transistor 235b, the transfer transistor 234c, and the transfer transistor 235c, and have anode sides connected to a ground GND.

The transfer transistor 234b, the transfer transistor 235b, the transfer transistor 234c, and the transfer transistor 235c respectively transfer charges from the photoelectric conversion element 231b, the photoelectric conversion element 232b, the photoelectric conversion element 231c, and the photoelectric conversion element 232c to the charge-voltage converter 233. The transfer transistor 234b, the transfer transistor 235b, the transfer transistor 234c, and the transfer transistor 235c have gates connected to a signal line into which a drive pulse φT1 or a drive pulse φT2 is supplied, and the other end sides connected to the charge-voltage converter 233. The transfer transistor 234b, the transfer transistor 235b, the transfer transistor 234c, and the transfer transistor 235c become in an ON state when the drive pulse φT1 or the drive pulse φT2 is supplied from a vertical scanning unit 241 through the signal line, and transfer the signal charges from the photoelectric conversion element 231b, the photoelectric conversion element 232b, the photoelectric conversion element 231c, and the photoelectric conversion element 232c to the charge-voltage converter 233.

### [Operation of Imaging Unit]

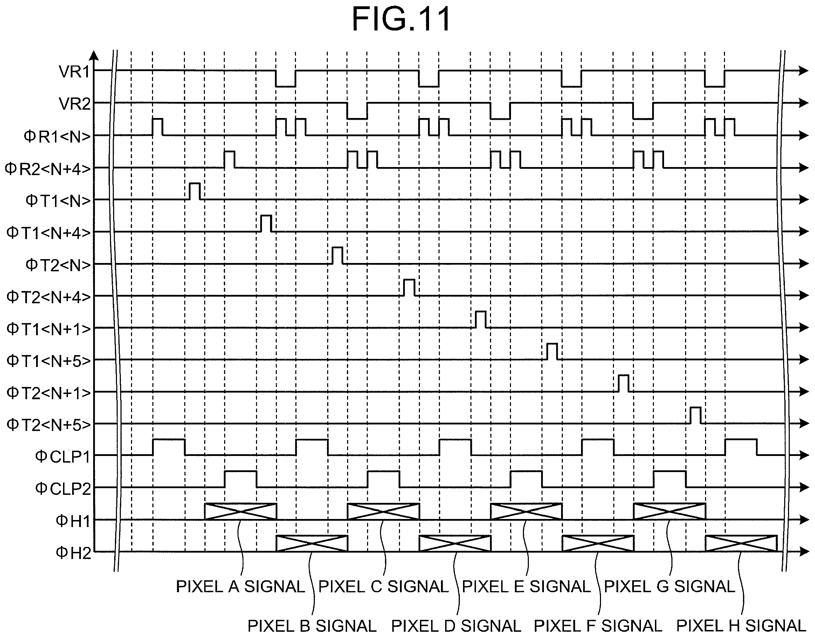

Next, drive timing of an imaging unit 20 will be described. FIG. 11 is a timing chart illustrating drive timing of the imaging unit 20 according to the third embodiment. In FIG. 11, up to readout of imaging signals from a pixel A to a pixel H illustrated in FIGS. 9 and 10 will be described. FIG. 11 illustrates, in order from the top, timing of a power supply voltage VR1, a power supply voltage VR2, a drive pulse φR1 <N>, a drive pulse φR2 <N + 4>, a drive pulse φT1 <N>, a drive pulse φT1 <N + 4>, a drive pulse φT2 <N>, a drive pulse φT2 <N + 4>, a drive pulse φT1 <N + 1>, a drive pulse φT1 <N + 5>, a drive pulse φT2 <N + 1>, a drive pulse φT2 <N + 5>, a drive pulse φCLP1, a drive pulse φCLP2, a drive pulse φH1, and a drive pulse φH2.

As illustrated in FIG. 11, a timing generating unit 25 drives the imaging unit 20 at similar timing to the first embodiment to read the imaging signals from the unit pixels 230b and output the imaging signals to an outside. To be specific, the timing generating unit 25 performs a reset noise removal operation of the unit pixel 230b of the other vertical transfer line 239 (239b), when the imaging signal of the unit pixel 230b is sequentially read from a reading unit 24 to a first horizontal transfer line 259 in a state where a pixel output transistor 238 of one vertical transfer line 239 (239a) is ON. Further, the timing generating unit 25 performs the reset noise removal operation of one vertical transfer line 239 (239a), when the imaging signal of the unit pixel 230b is sequentially read from the reading unit 24 to a second horizontal transfer line 260 in a state where the pixel output transistor 238 of the other vertical transfer line 239 (239b) is ON.

To be more specific, the timing generating unit 25 performs a clamp operation of a reset level of the other vertical transfer line 239, and then outputs the imaging signal from the pixel B to the vertical transfer line 239 (239b) in a period in which the imaging signal of the unit pixel 230b (pixel A) is sequentially read to the first horizontal transfer line 259, thereby to transfer the imaging signal to a reset noise removal unit 244 provide in each vertical transfer line 239.

Then, the timing generating unit 25 sequentially outputs the imaging signal of the unit pixel 230b (pixel B) to the second horizontal transfer line 260.

After that, the timing generating unit 25 performs the clamp operation of a reset level of the other vertical transfer line 239 (239a), and outputs the imaging signal from the unit pixel 230b (pixel C) to the vertical transfer line 239 (239a) and transfers the imaging signal to the reset noise removal unit 244 provided in each vertical transfer line 239, in a period in which the imaging signal of the unit pixel 230b (pixel B) is sequentially read to the second horizontal transfer line 260.

Then, the timing generating unit 25 sequentially outputs the imaging signal of the unit pixel 230b (pixel C) to the first horizontal transfer line 259. After that, the timing generating unit 25 performs the clamp operation of a reset level of the other vertical transfer line 239 (239b), and then outputs the imaging signal from the unit pixel 230b (pixel D) to the other vertical transfer line 239 (239b) in a period in which the imaging signal of the unit pixel 230b (pixel C) is sequentially read to the first horizontal transfer line 259, thereby to transfer the imaging signal to the reset noise removal unit 244 provided in each vertical transfer line 239. Then, the timing generating unit 25 sequentially outputs the imaging signal of the unit pixel 230b (pixel D) to the second horizontal transfer line 260.

In this way, the timing generating unit 25 performs a reset noise removal operation the other vertical transfer line 239 (239b), when the imaging signal of the unit pixel 230b is sequentially read from the reading unit 24 to the first horizontal transfer line 259 in a state where the pixel output transistor 238 of one vertical transfer line 239 (239a) is ON. Further, the timing generating unit 25 performs the reset noise removal operation of one vertical transfer line 239 (239a), when the imaging signal of the unit pixel 230b is sequentially read from the reading unit 24 to the second horizontal transfer line 260 in a state where the pixel output transistor 238 of the other vertical transfer line 239 (239b) is ON. With the operation, the pixel A, the pixel B, the pixel C, the pixel D, the pixel E, the pixel F, the pixel G, and the pixel H are read by the vertical transfer lines 239 of different rows from each other, and the reset noise removal operation of the other vertical transfer line is performed in a period in which one pixel is transferred to the first horizontal transfer line 259 or the second horizontal transfer line 260.

According to the third embodiment of the present invention, the pixel output transistors 238 positioned in different rows from each other are driven at the same time in at least a part of a period, and the transfer transistor 234 (charge transfer unit) positioned in one row is driven and the reset noise removal operation is performed by the reset noise removal unit 244, then the imaging signal is transferred to the first horizontal transfer line 259 while keeping the pixel output transistor 238 driven, which is positioned in one row, and then the transfer transistor 234 (charge transfer unit) positioned in the other row is driven and the reset noise removal operation is performed by the reset noise removal unit 244 in the operation period in which the pixel output transistor 238 positioned in one row (horizontal line) transfers the imaging signal to the first horizontal transfer line 259. Therefore, both the further downsizing and the fast readout can be realized.

### (Other Embodiments)

Further, the present embodiment is an endoscope inserted into a subject. However, the present embodiment can be applied to a capsule endoscope or an imaging device that captures a subject, for example.

In the description of the timing charts in the present specification, the context of the processing among the units has been clearly indicated using the expressions such as "first", "after that", and "then". However, the order of the processing necessary for implementing the present invention is not uniquely determined by the expressions. That is, the order of the processing in the timing charts described in the present specification can be changed with consistency.

In this way, the present invention can include various embodiments not described here, and various design changes and the like can be made within the scope of the technical idea identified by the claims.

### Reference Signs List

1 ENDOSCOPE SYSTEM
2 ENDOSCOPE
3 TRANSMISSION CABLE
4 OPERATING UNIT
5 CONNECTOR UNIT
6 PROCESSOR
7 DISPLAY DEVICE
8 LIGHT SOURCE DEVICE
20 IMAGING UNIT
21, 21a, and 21b FIRST CHIP
22 SECOND CHIP
23 LIGHT-RECEIVING UNIT
24 READING UNIT
25 TIMING GENERATING UNIT
27 BUFFER
31 OUTPUT UNIT
31a FIRST OUTPUT UNIT
31b SECOND OUTPUT UNIT
51 AFE UNIT
52 A/D CONVERTER
53 IMAGING SIGNAL PROCESSING UNIT
54 DRIVE PULSE GENERATING UNIT
55 POWER SUPPLY VOLTAGE GENERATING UNIT
61 POWER SUPPLY UNIT
62 IMAGE SIGNAL PROCESSING UNIT
63 CLOCK GENERATING UNIT
64 RECORDING UNIT
65 INPUT UNIT
66 PRESSOR CONTROLLER
100 INSERTION UNIT
101 DISTAL END
102 PROXIMAL END
230, 230a, and 230b UNIT PIXEL
231, 231a to 231c, 232, and 232a to 232c PHOTOELECTRIC CONVERSION ELEMENT
233 CHARGE-VOLTAGE CONVERTER
234, and 234a to 234c TRANSFER TRANSISTOR
235, and 235a to 235c TRANSFER TRANSISTOR
236 CHARGE-VOLTAGE CONVERTER RESET UNIT
238 PIXEL OUTPUT RESISTOR
239 VERTICAL TRANSFER LINE
240 CONSTANT CURRENT SOURCE
241 VERTICAL SCANNING UNIT
242 FIRST HORIZONTAL SCANNING UNIT
243 SECOND HORIZONTAL SCANNING UNIT
244 RESET NOISE REMOVAL UNIT
252 TRANSFER CAPACITANCE
253 CLAMP SWITCH
254 OUTPUT AMPLIFIER
259 FIRST HORIZONTAL TRANSFER LINE
260 SECOND HORIZONTAL TRANSFER LINE
C1 CAPACITOR

## Claims

1. An image sensor comprising:
a plurality of unit pixels arranged in a two-dimensional matrix, each of the unit pixels including a photoelectric converter, a charge-voltage converter, a charge transfer unit configured to transfer a charge from the photoelectric converter to the charge-voltage converter, and an output unit configured to output a signal voltage converted by the charge-voltage converter;
a plurality of first transfer lines provided in every column in an arrangement of the unit pixels, and configured to transfer the signal output from each of the unit pixels;
a constant current source provided in each of the first transfer lines, and configured to drive the output unit in each of the unit pixels to transfer the signal to the first transfer line;
a reset noise removal unit configured to remove a noise component caused by resetting the charge-voltage converter to a predetermined potential;
a second transfer line configured to transfer the signal from the first transfer line via the reset noise removal unit; and
a control unit configured
to drive the output units of the unit pixels respectively positioned in different rows at a same time in at least a part of a period,
to drive the charge transfer unit of the unit pixel positioned in one row and perform a reset noise removal operation by the reset noise removal unit, then to transfer the signal to the second transfer line while keeping the output unit of the unit pixel driven, the unit pixel being positioned in the one row, and
to drive the charge transfer unit of the unit pixel positioned in another row and perform the reset noise removal operation by the reset noise removal unit, in an operation period in which the output unit of the unit pixel positioned in the one row transfers the signal to the second transfer line.

2. The image sensor according to claim 1, wherein
the second transfer line includes
a first horizontal scanning line that outputs, to an outside, the signal output by the output unit of the unit pixel positioned in the one row, and
a second horizontal scanning line that outputs, to an outside, the signal output by the output unit of the unit pixel positioned in the other row.

3. The image sensor according to claim 2, wherein
the first horizontal scanning line and the second horizontal scanning line are arranged one above the other across the plurality of unit pixels.

4. The image sensor according to claim 1, comprising:
a first chip including the plurality of unit pixels and the plurality of first transfer lines, wherein
the constant current source, the reset noise removal unit, the second transfer line, and the control unit are arranged, and
the first chip is stacked.

5. The image sensor according to claim 1, wherein
the unit pixel includes: a plurality of the photoelectric converters; the charge-voltage converter; a plurality of the charge transfer units configured to transfer charges from the plurality of photoelectric converters to the charge-voltage converter; and the output unit configured to output a signal voltage converted by the charge-voltage converter, and
the control unit sequentially drives the plurality of photoelectric converters included in the unit pixel.

6. An endoscope comprising:
the image sensor according to claim 1 arranged in a distal end side of an insertion portion insertable into a subject.
